# EUROPÄISCHE PATENTANMELDUNG

(11) **EP 1 637 956 A1**
(43) Veröffentlichungstag der Anmeldung: **22.03.2006**
(21) Anmeldenummer: 04021928.9
(22) Anmeldetag: 15.09.2004
(51) Int. Cl.: G06F 1/00

(54) **Erzeugung anonymisierter Datensätze zum Testen und Entwickeln von Anwendungen**

(71) Anmelder: UBS AG, 8001 Zürich (CH)
(72) Erfinder: Dünki, Peter, 8004 Zürich (CH); Frei, Christoph, 5400 Baden (CH)
(74) Vertreter: Röthinger, Rainer

(57) **Zusammenfassung**

Es wird ein Mechanismus zum computergestützten Erzeugen von anonymisierten Datensätzen (44) für das Entwickeln und Testen von Anwendungsprogrammen, die für den Einsatz in einem produktiven Netzwerk bestimmt sind, beschrieben. Ein erfindungsgemäßes Verfahren umfasst das Bereitstellen wenigstens einer produktiven Datenbank mit Datensätze (40), welche zu anonymisierende produktive Datenelemente enthalten, das Bereitstellen wenigstens einer nicht-produktiven Datenbank mit Datensätzen (42), welche hinsichtlich der Zeichenkettenlängen der darin enthaltenen Datenelemente zumindest teilweise mit den produktiven Datensätzen übereinstimmen, das Ermitteln eines ersten Datensatzes (40) aus der produktiven Datenbank und eines zweiten Datensatzes (42) aus der nicht-produktiven Datenbank sowie das Erzeugen des anonymisierten Datensatzes (44) durch Ersetzen der zu anonymisierenden Datenelemente des ersten Datensatzes (40) mit Datenelementen des zweiten Datensatzes (44).

## Beschreibung

### Gebiet der Erfindung

Die Erfindung betrifft das Gebiet der Datenanonymisierung. Genauer gesagt betrifft die Erfindung das Erzeugen anonymisierter Datensätze für das Entwickeln und Testen von Computeranwendungen (nachfolgend als Anwendungen bezeichnet).

### Hintergrund der Erfindung

Das Entwickeln und Testen neuer Anwendungen erfordert das Vorhandensein von Daten, welche von den neuen Anwendungen bei Probeläufen verarbeitet werden können. Um den Ergebnissen der Probeläufe einen verlässlichen Aussagegehalt beimessen zu können, ist es unerlässlich, dass die bei den Probeläufen verarbeiteten Daten in technischer Hinsicht (z.B. was das Datenformat angeht) denjenigen Daten entsprechen, welche von den neuen Anwendungen im Anschluss an die Entwicklungs- und Testphase verarbeitet werden sollen. Aus diesem Grund werden im Rahmen der Probeläufe häufig diejenigen Anwendungsdaten, welche von den gegenwärtig produktiven (Vorgänger-)Versionen der zu entwickelnden oder zu testenden Anwendungen erzeugt wurden, verwendet. Diese Daten, im Folgenden als produktive Anwendungsdaten oder einfach als produktive Daten bezeichnet, sind üblicherweise datensatzweise in Datenbanken abgelegt.

Der Einsatz produktiver Anwendungsdaten für Entwicklungs- und Testzwecke ist in der Praxis nicht unproblematisch. So hat sich herausgestellt, dass die den Entwicklern aufgrund ihrer jeweiligen Autorisierung in der produktiven Umgebung zur Verfügung stehenden Datenräume oftmals nicht groß genug sind, um verlässliche Ergebnisse zu erhalten. Auch variieren aufgrund der personenbezogenen Datenraumautorisierungen die Ergebnisse von Probeläufen von Entwickler zu Entwickler. Zwar ließe sich die Datenraum-Autorisierung einzelner Personen für die Probeläufe temporär erweitern; diese Maßnahme ist jedoch aufwändig und insbesondere bei sensiblen oder vertraulichen Daten nicht ohne weitere Überprüfungen oder Einschränkungen möglich.

Ein anderer Ansatz hinsichtlich der Verwendung sensibler oder vertraulicher produktiver Anwendungsdaten im Rahmen von Probeläufen besteht darin, die Probeläufe an einem abgeschotteten und zugriffsgeschützten zentralen Erprobungssystem durchzuführen. Der mit der Einrichtung eines solchen zentralen Erprobungssystems verbundene technische Aufwand ist jedoch hoch. Zudem gestattet eine solche Vorhergehensweise keine Datenlieferung auf (dezentrale) Entwicklungs- und Testsysteme zur Fehleranalyse.

Die oben erläuterten und weitere Nachteile haben zu der Erkenntnis geführt, dass die Verwendung produktiver Daten für Entwicklungs- und Testzwecke in vielen Fällen ausscheidet. Es wurde daher nach einer Alternative für die Verwendung produktiver Daten gesucht. Diese Alternative sollte einerseits hinsichtlich des Datenformats, des Dateninhalts, usw. ein realistisches Abbild der produktiven Daten darstellen. Auf der anderen Seite sollten die zusätzlichen technischen Vorkehrungen, insbesondere was den Schutz gegen unberechtigte Zugriffe anbelangt (Autorisierungsmechanismen, Firewalls, usw.), möglichst gering gehalten werden können.

Es hat sich herausgestellt, dass die oben aufgeführten Anforderungen durch Testdaten erfüllt werden, welche durch eine teilweise Anonymisierung (oder Maskierung) von produktiven Datensätzen erzeugt werden. Indem sensible Elemente der produktiven Daten anonymisiert werden, sinkt der potentielle Schaden, der bei unberechtigten Zugriffen zu befürchten wäre. Dies gestattet es, die Sicherheitsmechanismen zu lockern. Insbesondere können die Testdaten für Probeläufe und zur Fehleranalyse auf dezentrale Systeme geladen werden. Da aber andererseits die technischen Aspekte (Datenformat, usw.) der produktiven Anwendungsdaten durch einen geeignete Anonymisierungsmechanismus nicht oder nur geringfügig geändert werden müssen, bilden die anonymisierten Testdaten ein realistisches Abbild der produktiven Daten.

Das Anonymisieren eines Datensatzes kann dadurch erfolgen, dass die zu anonymisierenden Datenelemente gelöscht oder durch einen vordefinierten und für alle Datensätze identischen Standardtext überschrieben werden, während die nicht zu anonymisierenden Datenelemente unverändert beibehalten werden. Eine solche Vorhergehensweise führt zu anonymisierten Datensätzen, ohne dass sich (wesentliche) Änderungen des Datenformats ergeben würden. Es hat sich jedoch herausgestellt, dass Probeläufe unter Verwendung derart anonymisierter Datensätze nicht alle Schwachstellen der zu entwickelnden oder zu testenden Anwendung aufzeigen und bei ersten Einsätzen der Anwendung im produktiven Umfeld häufig noch Fehler auftreten.

Der Erfindung liegt die Aufgabe zugrunde, einen effizienten Ansatz für die Bereitstellung anonymisierten Testdaten anzugeben. Dabei sollen die Testdaten insbesondere ein möglichst getreues Abbild der produktiven Daten sein, um den Aussagegehalt von Probeläufen zu optimieren. Gleichzeitig soll die Ausfallwahrscheinlichkeit der neu zu entwickelnden Anwendung im produktiven Umfeld minimiert sowie der damit verbundene Wartungsaufwand gesenkt werden.

### Kurzer Abriss der Erfindung

Diese Aufgabe wird gemäß einem ersten Aspekt der Erfindung durch ein Testdaten-Anonymisierungsverfahren gelöst, das anonymisierte Datensätze für das Entwickeln und Testen von Anwendungsprogrammen erzeugt, die für den Einsatz in einem produktiven Umfeld (z. B. einem produktiven Computernetzwerk) bestimmt sind. Das Verfahren umfasst die Schritte des Bereitstellens wenigstens einer produktiven Datenbank mit Datensätzen, welche zu anonymisierende produktive Datenelemente enthalten, des Bereitstellens wenigstens einer nicht-produktiven Datenbank mit Datensätzen, welche hinsichtlich der Zeichenkettenlängen (wenigstens einer Untermenge) der darin enthaltenen Datenelemente mit produktiven Datensätzen zumindest im Wesentlichen übereinstimmen, des Ermittelns eines ersten Datensatzes aus der produktiven Datenbank, des Ermittelns eines zweiten Datensatzes aus der nicht-produktiven Datenbank und des Erzeugens eines anonymisierten Datensatzes durch Ersetzen der zu anonymisierenden Datenelemente des ersten Datensatzes mit Datenelementen des zweiten Datensatzes.

Die anonymisierten Datenelemente der anonymisierten Datensätze stimmen daher (zumindest teilweise) hinsichtlich ihrer Zeichenkettenlängen mit produktiven Datenelementen überein. Diese Maßnahme bewirkt, dass die anonymisierten Datensätze ein genaueres Abbild der produktiven Datensätze darstellen. Insbesondere zeichenkettenlängenkritische Bearbeitungsschritte (wie Sortieralgorithmen) oder zeichenlängenkritische Ausgabeoperationen (wie das Erzeugen von Drucksachen) lassen sich mittels der erfindungsgemäß anonymisierten Datensätze daher zuverlässiger überprüfen. Unterstützt wird dieser Ansatz durch das Bereitstellen einer Vielzahl von die zu anonymisierenden Datenelemente ersetzenden Datenelemente. Diese Vorhergehensweise ermöglicht eine den produktiven Datensätzen entsprechende oder angenäherte Individualisierung der anonymisierten Datensätze, was ebenfalls in vielen Fällen zu zuverlässigeren Probeläufen führt, da beispielsweise statistische Eigenschaften der produktiven Datenelemente nachgebildet werden können.

Das Ersetzen der Datenelemente kann derart erfolgen, dass die zu anonymisierenden Datenelemente des ersten Datensatzes (zumindest mit statistisch gesehen hoher Wahrscheinlichkeit) andere Zeichenkettenlängen aufweisen als die sie ersetzenden Datenelemente aus der nicht-produktiven Datenbank. Ferner kann vorgesehen werden, dass in der nicht-produktiven Datenbank kein Datensatz enthalten ist, der bezüglich einer Kombination der Zeichenkettenlängen einer darin enthaltenen Datenelementmenge in der nicht-produktiven Datenbank nur ein einziges Mal auftritt. Jede dieser beiden Maßnahmen und insbesondere deren Kombination erhöht den Anonymisierungsgrad der anonymisierten Datensätze.

Es wurde nämlich gefunden, dass einzelne produktive Datensätze häufig anhand von Zeichenkettenlängen darin enthaltener Datenelemente und insbesondere anhand von Kombinationen derartiger Zeichenkettenlängen eindeutig identifizierbar sind. Es ist daher zweckmäßig, wenn zumindest auf der Ebene eines einzelnen Datensatzes die Datenelemente, welche die zu anonymisierenden Datenelemente ersetzen sollen, andere individuelle Zeichenkettenlängen (oder Zeichenkettenlängenkombinationen) aufweisen als die ersetzten zu anonymisierenden Datenelemente. Zweckmäßig ist es in dieser Hinsicht auch (vor allem wenn die nicht-produktiven Datensätze durch Kopieren produktiver Datensätze oder Datenelemente erhalten wurden), wenn kein Datensatz der nicht-produktiven Datenbank hinsichtlich einer Kombination von Zeichenkettenlängen der darin enthaltenen Datenelemente einzigartig ist.

Wie bereits eingangs erläutert, stimmen die nicht-produktiven Datensätze hinsichtlich der Zeichenkettenlängen aller oder einer Untermenge der darin enthaltenen Datenelemente mit produktiven Datensätzen im Wesentlichen überein. Gemäß einer ersten Variante betrifft diese Übereinstimmung die Anzahl der in den einzelnen Zeichenketten enthaltenen Zeichen. Gemäß einer zweiten Variante, die mit der ersten kombinierbar ist, betrifft die Übereinstimmung hinsichtlich der Zeichenkettenlängen die individuellen geometrischen Abmessungen der Datenelemente bei ihrer Wiedergabe (beispielsweise auf einem Bildschirm, einem Ausdruck usw.). So können die Datenelementbilder (d.h. die graphischen Darstellungen) der nicht-produktiven Datensätze zumindest teilweise mit den Datenelementbildern von produktiven Datensätzen übereinstimmen. Hierbei ist es jedoch nicht erforderlich, dass die vorstehend geforderten Übereinstimmungen zwischen dem zur Erzeugung eines einzelnen anonymisierten Datensatzes herangezogenen ersten Datensatz aus der produktiven Datenbank und dem zweiten Datensatz aus der nicht-produktiven Datenbank bestehen. Vielmehr ist es ausreichend und in vielen Fällen sogar zweckmäßig, wenn die geforderten Übereinstimmungen insgesamt zwischen der Menge der nicht-produktiven Datensätze und der Menge der produktiven Datensätze gelten.

Der Ansatz, zur Erzeugung eines anonymisierten Datensatzes Datenelemente aus der produktiven Datenbank mit Datenelementen aus der nicht-produktiven Datenbank zu kombinieren, ermöglicht es, dass die nicht-produktive Datenbank Kopien von Datensätzen und/oder Datenelementen der produktiven Datenbank enthält. Diese Vorhergehensweise vereinfacht das Erstellen der nicht-produktiven Datenbank (z.B. durch vollständiges oder selektives Historisieren der produktiven Datenbank). Vor allem in Kombination mit einem eine ausreichende Anonymisierung gewährleistenden Zuordnungsschema zwischen produktiven und nicht-produktiven Datensätzen bleibt eine für viele Zwecke ausreichend hohe Anonymisierung gewährleistet. Insbesondere unterstützt diese Maßnahme die Forderung, dass die nicht-produktiven Datensätze hinsichtlich der Zeichenkettenlängen der darin enthaltenen Datenelemente mit produktiven Datensätzen übereinstimmen sollen.

Die nicht-produktive Datenbank kann ausschließlich oder zumindest teilweise Datensätze mit von den produktiven Datenelementen verschiedenen Datenelementen enthalten. In der Praxis wurde gefunden, dass eine ausreichende Anonymisierung jedenfalls dann noch gewährleistet ist, wenn der Anteil von Datensätzen mit von den produktiven Datenelementen verschiedenen Datenelementen in der nicht-produktiven Datenbank mindestens 5% beträgt. Vorzugsweise beträgt dieser Anteil 10% oder mehr.

Die von den produktiven Datenelementen verschiedenen Datenelemente in der nicht-produktiven Datenbank können einer öffentlich zugänglichen elektronischen Datenbank oder Datei entnommen werden. Je nach Typ, Format und Bedeutungsinhalt der zu anonymisierenden Datenelemente (und in Abhängigkeit von der zu entwickelnden oder zu testenden Anwendung) kommen unterschiedliche öffentlich zugängliche elektronische Datenbanken oder Dateien hierfür in Frage. Als geeignet haben sich beispielsweise elektronische Verzeichnisse und Telefonbücher (oder anderweitige elektronische Namens- und/oder Adressverzeichnisse) erwiesen.

Das Ermitteln der Datensätze aus der produktiven und aus der nicht-produktiven Datenbank kann auf unterschiedlichste Art und Weise erfolgen. Im einfachsten Fall erfolgt das Ermitteln durch ein sequentielles Auslesen und Zuordnen der Datensätze aus den beiden Datenbanken. Es ist jedoch auch möglich, dass das Ermitteln zugehöriger Datensätze auf einer Zuordnung zwischen Datenelementen oder Datensätzen aus der nicht-produktiven Datenbank und zu anonymisierenden Datenelementen oder Datensätzen aus der produktiven Datenbank basiert.

Die Zuordnung kann zufallsbasiert erfolgen oder aber auf einem deterministischen Zuordnungsverfahren basieren. Die deterministische Zuordnung kann unter Verwendung einer Zuordnungstabelle und/oder eines kryptographischen Mechanismus ablaufen.

Die deterministische Zuordnung kann derart erfolgen, dass eine nachträgliche Bestimmung des einem anonymisierten Datenelement oder Datensatz zugeordneten Datenelements oder Datensatzes aus der produktiven Datenbank möglich ist. Diese Maßnahme erleichtert beispielsweise die Fehleranalyse bei Probeläufen. Die deterministische Zuordnung kann gewährleisten, dass einem Datenelement oder Datensatz aus der produktiven Datenbank immer dasselbe Datenelement oder derselbe Datensatz aus der nicht-produktiven Datenbank zugeordnet wird. Diese Maßnahme ist insbesondere dann vorteilhaft, wenn ein Mechanismus zum Aktualisieren der anonymisierten Datensätze vorgesehen ist.

Zur Verbesserung des Aussagegehalts von Probeläufen können die statistischen Eigenschaften der Datenelemente oder von Datenelementabschnitten (beispielsweise am Beginn der Datenelemente) der nicht-produktiven Datenbank den statistischen Eigenschaften der Datenelemente oder von Datenelementabschnitten in der produktiven Datenbank entsprechen oder angenähert sein. So ist es denkbar, dass die statistischen Verteilungen wenigstens des jeweils ersten alphanumerischen Zeichens bestimmter Datenelemente in der produktiven Datenbank und in der nicht-produktiven Datenbank (zumindest ungefähr) übereinstimmen. In der Praxis hat sich gezeigt, dass viele Mechanismen zu entwickelnder oder zu testender Anwendungen (z.B. Sortieralgorithmen) zeichenselektiv sind. Aus diesen und auch aus weiteren Gründen lassen sich zuverlässigere Aussagen bei Probeläufen gewinnen, wenn die produktive Datenbank und die nicht-produktive Datenbank zumindest hinsichtlich testrelevanter Aspekte vergleichbaren Statistiken genügen.

Den einzelnen Datenelementen von Datensätzen der produktiven Datenbank und von Datensätzen der nicht-produktiven Datenbank können jeweils Kennungen zugeordnet sein. Das Vorsehen der Kennungen ermöglicht es, die zu anonymisierenden produktiven Datenelemente durch Datenelemente mit korrespondierenden Kennungen zu ersetzen.

Die in der nicht-produktiven Datenbank enthaltenen Datenelemente können zumindest teilweise einen von einem Benutzer erfassbaren Bedeutungsinhalt haben. So kann es sich bei diesen Datenelementen (jedenfalls teilweise) um Texte, Bezeichnungen, Namen, Adressangaben usw. handeln. Gemäß einer Ausführungsform der vorliegenden Erfindung enthalten die in der produktiven und/oder die in der nicht-produktiven Datenbank enthaltenen Datenelemente Namens- und/oder Adressdaten.

Der erfindungsgemäße Anonymisierungsansatz liefert anonymisierte Datensätze, welche zum Entwickeln und Testen von Anwendungsprogrammen geeignet sind. Bei diesen Anwendungsprogrammen kann es sich um Programme handeln, welche die in den anonymisierten Datensätze enthaltenen Datenelemente auf einer Anzeigeeinrichtung (beispielsweise auf einem Computerbildschirm) oder in Form einer Drucksache (beispielsweise als adressiertes Anschreiben) ausgeben. Die erfindungsgemäß anonymisierten Datensätze eignen sich jedoch auch für Probeläufe von Anwendungen, welche zeichenkettenlängen- und/oder zeichentypselektive Algorithmen wie Sortier-oder kryptographische Algorithmen enthalten.

Die Erfindung kann als Software oder als Hardware oder als eine Kombination dieser beiden Aspekte ausgeführt sein. So wird gemäß einem weiteren erfindungsgemäßen Aspekt ein Computerprogrammprodukt mit Programmcodemitteln zum Durchführen des erfindungsgemäßen Verfahrens, wenn das Computerprogrammprodukt auf einem oder mehreren Computern ausgeführt wird, zur Verfügung gestellt. Das Computerprogrammprodukt kann auf einem computerlesbaren Datenträger gespeichert sein.

Gemäß einem Hardware-Aspekt der Erfindung wird ein Computersystem zum Erzeugen von anonymisierten Datensätzen für das Entwickeln und Testen von Anwendungsprogrammen, die für den Einsatz in einem produktiven Umfeld bestimmt sind, geschaffen. Das Computersystem umfasst wenigstens eine produktive Datenbank mit Datensätzen, welche zu anonymisierende produktive Datenelemente enthalten, wenigstens eine nicht-produktive Datenbank mit Datensätzen, welche hinsichtlich der Zeichenkettenlängen der darin enthaltenen Datenelemente mit produktiven Datensätzen zumindest im Wesentlichen übereinstimmen, und einen programmierten Computer mit Zugriff auf die produktive Datenbank und auf die nicht produktive Datenbank, zum Ermitteln eines ersten Datensatzes aus der produktiven Datenbank und eines zweiten Datensatzes aus der nicht-produktiven Datenbank sowie zum Erzeugen eines anonymisierten Datensatzes durch Ersetzen der zu anonymisierenden Datenelemente des ersten Datensatzes mit Datenelementen des zweiten Datensatzes. Das Computersystem kann ferner eine Testdatenbank umfassen, in welcher die anonymisierten Datensätze abgelegt sind.

### Kurze Zusammenfassung der Zeichnungen

Weitere Vorteile und Ausgestaltungen der Erfindung werden nachfolgend unter Bezugnahme auf bevorzugte Ausführungsbeispiele sowie auf die beigefügten Zeichnungen näher erläutert. Es zeigt:
- Figur 1: ein erfindungsgemäßes Computersystem zum Erzeugen anonymisierter Datensätze;
- Figur 2: ein schematisches Ablaufdiagramm des erfindungemäßen Verfahrens zum Erzeugen anonymisierter Datensätze;
- Figur 3: eine schematische Darstellung der Erzeugung anonymisierter Datensätze gemäß einem ersten Ausführungsbeispiel; und
- Figur 4: eine schematische Darstellung der Erzeugung anonymisierter Datensätze gemäß einem zweiten Ausführungsbeispiel.

### Beschreibung bevorzugter Ausführungsbeispiele

Nachfolgend wird die Erfindung unter Bezugnahme auf bevorzugte Ausführungsbeispiele näher erläutert. Obwohl eines der erläuterten Ausführungsbeispiele auf die Erzeugung von anonymisierten Datensätzen mit realistischen Adressbildern gerichtet ist, ist darauf hinzuweisen, dass die Erfindung nicht auf dieses Einsatzgebiet beschränkt ist. Die Erfindung kann beispielsweise überall dort zum Einsatz gelangen, wo Anwendungen mit zeichenkettenlängenselektiven Verarbeitungsschritten getestet werden sollen.

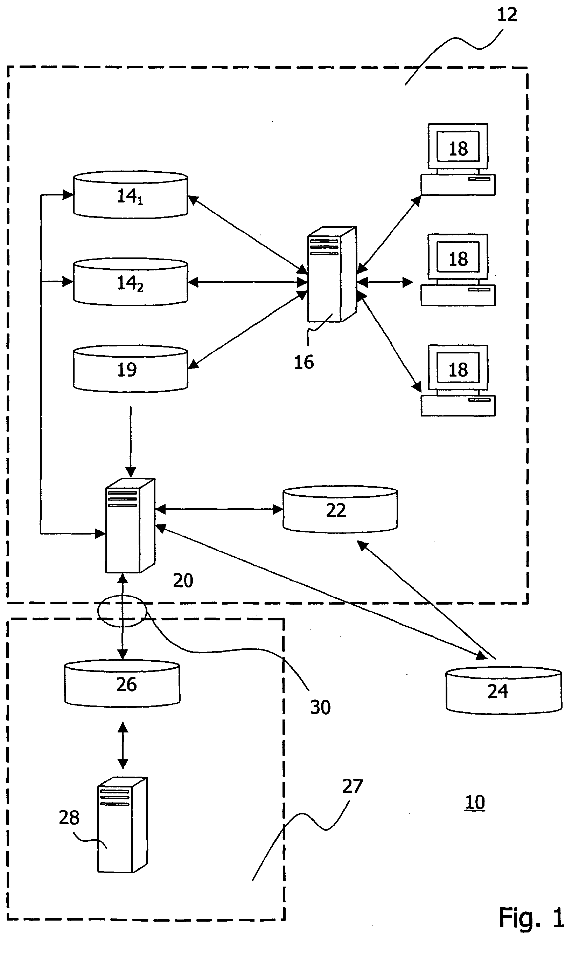

Fig. 1 zeigt ein Ausführungsbeispiel eines erfindungsgemäßen Computersystems 10 zum Erzeugen von anonymisierten Datensätzen für das Entwickeln und Testen von Anwendungsprogrammen. Bei den verschiedenen Ausführungsbeispielen sind übereinstimmende Elemente und Komponenten jeweils mit übereinstimmenden Bezugszeichen versehen.

Das Computersystem 10 umfasst gemäß dem in Fig. 1 dargestellten Ausführungsbeispiel ein produktives Computernetzwerk 12 mit einer Mehrzahl von produktiven Datenbanken 14, wenigstens einem Anwendungs-Server 16 sowie einer Vielzahl von Computerterminals 18. Auf dem Anwendungs-Server 16 laufen mehrere Anwendungsprogramme, deren Dienste der Anwendungs-Server 16 den Computerterminals 18 im produktiven Netzwerk 12 zur Verfügung stellt. Der Anwendungs-Server 16 ermöglicht außerdem als Datenbank-Server Zugriff auf in den produktiven Datenbanken 14 enthaltene (produktive) Datensätze. Die logisch zusammengehörenden Datenelemente (oder Daten) eines solchen Datensatzes können über mehrere produktive Datenbanken 14 verteilt sein. So können statische Datenelemente der produktiven Datensätze in einer ersten produktiven Datenbank 14₁ und nicht-statische Datenelemente der produktiven Datensätze in einer zweiten produktiven Datenbank 14₂ gespeichert und gepflegt werden. Das produktive Netzwerk 12 und insbesondere die produktiven Datenbanken 14 sind durch eine Reihe von Sicherheitsmechanismen gegen unbefugte Zugriffe geschützt. Diese Sicherheitsmechanismen beinhalten Authentisierungskonzepte sowie benutzerabhängige Datenraumautorisierungen.

In dem produktiven Netzwerk 12 wird von den auf dem Anwendungs-Server 16 laufenden Anwendungsprogrammen bestimmungsgemäßer Gebrauch gemacht. Dies bedeutet, dass ständig produktive Anwendungsdaten zwischen dem Anwendungs-Server 16 und den produktiven Datenbanken 14 einerseits und dem Anwendungs-Server 16 und den Computerterminals 18 andererseits transferiert werden. Diese produktiven Daten haben demgemäß eine durch die auf dem Anwendungs-Server 16 laufenden Anwendungsprogramme definierte Zweckbestimmung. So kann es sich bei den Anwendungsprogrammen um Maschinensteuerungen, um adressbasierte Anwendungen (z.B. zur Erzeugung von Drucksachen), um Komponenten eines ERP-(Enterprise Resource Planning) Systems, um ein CAD-(Computer Aided Design) Programm, usw. handeln. Die eigentliche Zweckbestimmung der Anwendungsdaten tangiert nicht den Umfang dieser Erfindung.

Ferner ist im produktiven Netzwerk 12 eine Zuordnungs-Komponente 19 vorhanden, welche im Ausführungsbeispiel gemäß Fig. 1 als Datenbank angedeutet ist und deren Funktion später genauer beschrieben wird. Je nach vorgesehenem Zuordnungsmechanismus kann die Zuordnungs-Komponente 19 auch als Datei, als kryptographische Programmroutine, usw. ausgebildet werden. Eine geeignete Autorisierung vorausgesetzt, kann mittels einiger der Computerterminals 18 über den Anwendungs-Server 16 auf die Zuordnungs-Komponente 19 zugegriffen werden.

In dem in Figur 1 dargestellten Beispielfall umfasst das Computersystem 10 ferner einen innerhalb des produktiven Netzwerks 12 angeordneten Anonymisierungscomputer 20 mit Zugriff auf die Zuordnungs-Komponente 19 sowie auf drei weitere Datenbanken, nämlich auf eine nicht-produktive Datenbank 22 mit z.B. historisierten produktiven Datensätzen (aus Gründen der Zugriffskontrolle noch im produktiven Netzwerk 12 angeordnet), eine öffentlich zugängliche elektronische Datenbank 24 mit öffentlichen Datensätzen sowie wenigstens eine Testdatenbank 26 mit anonymisierten Datensätzen. Der Anonymisierungscomputer 20 hat Lesezugriff auf die produktiven Datenbanken 14, die Zuordnungs-Komponente 19 und die öffentlich zugängliche elektronische Datenbank 24 sowie Schreib-/Lese-Zugriff auf die Historisierungs-Datenbank 22 und die Testdatenbank 26.

Der funktionale Unterschied zwischen den produktiven Datenbanken 14 und der nicht-produktiven Datenbank 22 besteht im Wesentlichen darin, dass die Inhalte der produktiven Datenbanken 14 durch den Anwendungsserver (fortlaufend) manipulierbar sind, während die nicht-produktive Datenbank 22 eine "Datenkonserve" darstellt, welche von den auf dem Anwendungsserver 16 laufenden Anwendungsprogrammen bei ihrem bestimmungsgemäßen Gebrauch nicht benötigt wird.

Die öffentlich zugängliche elektronische Datenbank 24 und die Testdatenbank 26 befinden sich in Figur 1 außerhalb des produktiven Netzwerks 12. Genauer gesagt ist die Testdatenbank 26 innerhalb eines Entwicklungs- und Testumfelds in Form eines Computer-Netzwerks 27 angeordnet. Eine Schnittstelle 30 ermöglicht ein Überführen anonymisierter Datensätze aus dem produktiven Netzwerk 12 in die Testdatenbank 26 und damit in das Netzwerk 27. Das Netzwerk 27 gleicht in seinem Aufbau dem produktiven Netzwerk 12 und umfasst einen Anwendungs-Server 28 für Entwicklungs- und Testzwecke. Der Anwendungs-Server 28 hat Zugriff auf die Testdatenbank 26. Die Testdatenbank 26 kann ähnlich wie die produktiven Datenbanken 14 strukturiert sein. Um ein optimales Testen neuer oder verbesserter Anwendungen zu ermöglichen, kann die Datenbank 26 einen identischen Aufbau wie die produktiven Datenbanken 14 besitzen. Dies kann erfordern, die Datenbank 26 in einzelne, physisch getrennte Datenbanken aufzuspalten.

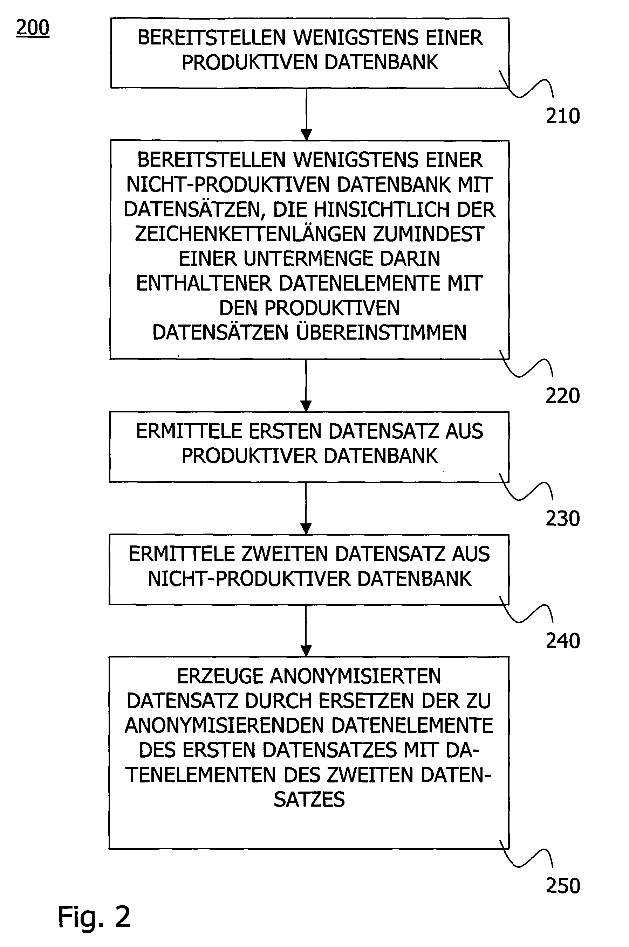

Die Funktionsweise des in Figur 1 dargestellten Computersystems 10 beim Erzeugen von anonymisierten Datensätzen gemäß dem erfindungsgemäßen Anonymisierungsverfahren wird nun unter Bezugnahme auf das in Figur 2 dargestellte Flussdiagramm 200 näher erläutert.

Das Verfahren beginnt mit dem Bereitstellen der produktiven Datenbanken 14 sowie wenigstens einer nicht-produktiven Datenbank 22 in den Schritten 210 und 220. In den Datenbanken 14, 22 sind produktive und nicht-produktive Datensätze enthalten, die jeweils aus einzelnen Datenelementen bestehen. In der nicht-produktiven Datenbank 22 sind (jedenfalls auch) Datensätze vorhanden, die hinsichtlich der Zeichenkettenlängen zumindest einer Untermenge darin enthaltener Datenelemente mit den produktiven Datensätzen (also mit einer entsprechenden Untermenge jeweils darin enthaltener produktiver Datenelemente) übereinstimmen.

In den beiden folgenden Schritten 230 und 240 wird ein erster Datensatz aus den produktiven Datenbanken 14 sowie ein zweiter Datensatz aus der nicht-produktiven Datenbank 22 ausgelesen. Die Schritte 230 und 240 könnten auch in umgekehrter Reihenfolge ausgeführt werden. Die Reihenfolge, in welcher die Schritte 230 und 240 ausgeführt werden, kann durch ein Zuordnungsschema zwischen Datenelementen oder Datensätzen aus der nicht-produktiven Datenbank 22 und zu anonymisierenden Datenelementen oder Datensätzen aus den produktiven Datenbanken 14 bestimmt sein. So kann einem aus den produktiven Datenbanken 14 ausgelesenen ersten Datensatz ein zweiter Datensatz aus der nicht-produktiven Datenbank 22 zugelost werden oder deterministisch zugeteilt sein.

In einem abschließenden Schritt 250 wird ein anonymisierter Datensatz erzeugt, indem zu anonymisierende Datenelemente des ersten Datensatzes (aus den produktiven Datenbanken 14) durch Datenelemente des zweiten Datensatzes (aus der nicht-produktiven Datenbank 22) ersetzt werden. Der anonymisierte Datensatz wird in der Testdatenbank 26 abgelegt.

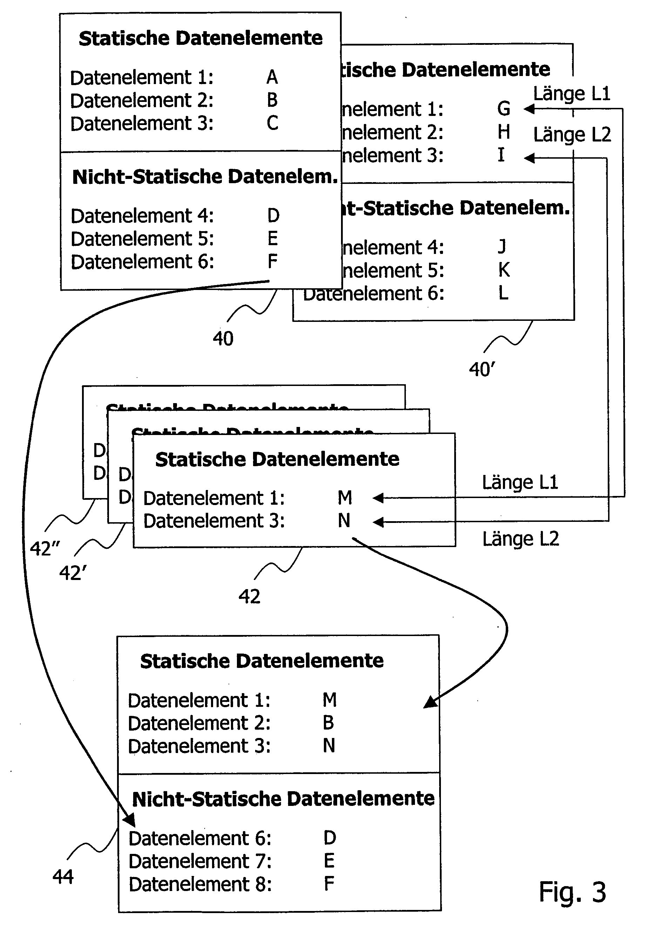

Fig. 3 zeigt eine schematische Darstellung eines Ausführungsbeispiels für die Erzeugung anonymisierter Datensätze unter Verwendung von in den produktiven Datenbanken 14 enthaltenen produktiven Datensätzen 40, 40' einerseits und von in der nicht-produktiven Datenbank 22 (und/oder der öffentlich zugänglichen elektronischen Datenbank 24) enthaltenen nicht-produktiven Datensätzen 42, 42', 42" andererseits.

Die in der nicht-produktiven Datenbank 22 enthaltenen Datensätze können auf unterschiedliche Art und Weise erzeugt worden sein. Gemäß einer ersten Variante wurden sämtliche Datensätze in der nicht-produktiven Datenbank 22 durch Kopieren von öffentlichen Datensätzen (oder zumindest durch Kopieren von darin enthaltenen Datenelementen) aus der Datenbank 24 erhalten. Gemäß einer zweiten Variante wurden sämtliche nicht-produktiven Datensätze durch Kopieren oder Historisieren (Abzug per einem bestimmten Zeitpunkt) von produktiven Datensätzen (oder zumindest durch Kopieren oder Historisieren von darin enthaltenen Datenelementen) erzeugt. Gemäß einer dritten Variante umfasst die nicht-produktive Datenbank 22 Datensätze, welche hinsichtlich der darin enthaltenen Datenelemente den produktiven Datenbanken 14 und der öffentlich zugänglichen elektronischen Datenbank 24 entstammen. Nicht-produktive Datensätze mit Datenelementen aus der öffentlich zugänglichen elektronischen Datenbank 24 können somit nicht-produktiven Datensätzen mit Datenelementen aus den produktiven Datenbanken 14 zur Erhöhung des Anonymisierungsgrades beigemischt werden. Es wird auf diese Weise ein Unsicherheitsfaktor dahingehend erzeugt, dass im Entwicklungs- und Testumfeld anhand eines anonymisierten Datensatzes kein eindeutiger Rückschluss auf die Existenz eines zugehörigen produktiven Datensatzes (und entsprechender produktiver Datenelemente) mehr möglich ist.

In Fig. 3 oben sind exemplarisch zwei produktive Datensätze 40, 40' dargestellt. Je-. der dieser Datensätze 40, 40' umfasst eine Mehrzahl indizierter produktiver Datenelemente (A, B, C, ...), die von den auf dem Anwendungs-Server 16 laufenden Anwendungsprogrammen manipuliert (erzeugt, geändert, gelöscht, usw.) und verarbeitet werden können.

Die Datenelemente sind in dem in Fig. 3 dargestellten Beispielfall in statische Datenelemente (oder Stammdaten) und nicht-statische Datenelemente (oder Bewegungsdaten) unterteilt. Bei nicht-statischen Datenelementen handelt es sich vorzugsweise um sehr kurzlebige Datenelemente, die üblicherweise lediglich für den Ablauf einer individuellen Transaktion erforderlich sind. Typische OLTP (Online Transaction Processing)-Systeme sind ausgelegt, um viele Tausende oder sogar Millionen einzelner kleiner Transaktionen pro Tag zu prozessieren. Jedenfalls in nicht-kondensierter Form sind die nicht-statischen Datenelemente daher nur kurze Zeit verfügbar (obwohl sie aus Gründen der Nachvollziehbarkeit einzelner Transaktionen in der Regel in kondensierter Form gesichert werden). Die statischen Datenelemente können im Vergleich zu lediglich transaktionsaktuellen nicht-statischen Datenelemente zeitlich deutlich langlebiger sein. Aus diesem Grund werden in der Regel viele Datensätze identische statische Datenelemente aber transaktionsbezogen unterschiedliche nicht-statische Datenelemente aufweisen. Trotz ihrer Langlebigkeit können auch die statischen Datenelemente Manipulationen unterliegen, die jedoch im Vergleich zur Lebensdauer typischer transaktionsbezogener nicht-statischer Datenelemente äußerst selten auftreten.

Bei den statischen Datenelementen handelt es sich demgemäß um solche Daten, welche von den Anwendungsprogrammen zwar benötigt werden, jedoch nicht oder jedenfalls nicht häufig manipuliert werden und von einer Vielzahl von unterschiedlichen Prozessen jeweils identisch verwendet werden. Bei einem statischen Datenelement kann es sich beispielsweise um ein Ereignis-Datum (z.B. eine Tages- oder Jahresangabe), um einen Namen, eine Adressangabe, einen Sollwert, usw. handeln. Die nicht-statischen Datenelemente werden hingegen von den auf dem Anwendungs-Server 16 laufenden Anwendungsprogrammen regelmäßig manipuliert, bilden also beispielsweise die Eingabe- oder Ausgabeparameter dieser Anwendungsprogramme. Bei dem Ausführungsbeispiel gemäß Fig. 3 wird angenommen, dass lediglich einige der statischen Datenelemente der produktiven Datensätze zu anonymisieren sind, während die nicht-statischen Datenelemente keiner Anonymisierung bedürfen und unverändert in der Entwicklungs- und Testumgebung zur Verfügung stehen sollen.

Den einzelnen Datenelementen ist jeweils eine Kennung in Form einer Zahl zwischen 1 und 6 zugeordnet. Korrespondierende Kennungen werden sowohl für die produktiven Datensätze 40, 40' als auch für die nicht-produktiven Datensätze 42, 42', 42" verwendet. Diese Vorhergehensweise ermöglicht es, zu anonymisierende produktive Datenelemente durch nicht-produktive Datenelemente mit einer korrespondierenden Kennung zu ersetzen.

Die nicht-produktiven Datensätze 42, 42', 42" umfassen im Beispielfall gemäß Fig. 3 nur solche Datenelemente, welche zum Anonymisieren der produktiven Datensätze benötigt werden. Da bei dem Ausführungsbeispiel gemäß Fig. 3 lediglich die produktiven Datenelemente mit den Kennungen 1 und 3 anonymisiert werden müssen, enthalten die nicht-produktiven Datensätze 42, 42', 42" zur Verringerung des Speicherplatzbedarfs jeweils lediglich Datenelemente mit den Kennungen 1 und 3. Gemäß einer Abwandlung des Ausführungsbeispiels gemäß Fig. 3 wäre es jedoch möglich, dass die nicht-produktiven Datensätze 42, 42', 42"dasselbe Format wie die oben erläuterten produktiven Datensätze 40, 40' aufweisen (d.h. statische und nicht-statische Datenelemente wie die produktiven Datensätze 40, 40' umfassen). In diesem Fall würden nur die zu Anonymisierungszwecken benötigten Datenelemente (hier mit den Kennungen 1 und 3) aus den nicht-produktiven Datensätzen ausgelesen und in die jeweils zu erzeugenden anonymisierten Datensätze übernommen.

Wie sich aus Fig. 3 ergibt, stimmt der nicht-produktive Datensatz 42 hinsichtlich der Zeichenkettenlängen der darin enthaltenen Datenelemente 1 und 3 mit dem produktiven Datensatz 40' überein. Mit anderen Worten, sowohl das Datenelement G mit der Kennung 1 des produktiven Datensatzes 40' als auch das Datenelement M mit der Kennung 1 des nicht-produktiven Datensatzes 42 besitzen beide die gleiche Zeichenkettenlänge L1. Ferner weisen sowohl das Datenelement I (Kennung 3) des produktiven Datensatzes 50' als auch das im Datenelement N (Kennung 3) des nicht-produktiven Datensatzes 42 jeweils die übereinstimmende Länge L2 auf. In der nicht-produktiven Datenbank 22 ist der Datensatz 42 jedoch nicht einzigartig hinsichtlich des Vorhandenseins eines Datenelements der Kennung 1 mit Länge L1 und des Datenelements 3 mit einer Länge L2. Vielmehr ist in der nicht-produktiven Datenbank 22 wenigstens ein weiterer Datensatz (z.B. Datensatz 42' und/oder Datensatz 42") vorhanden, der ebenfalls ein Datenelement der Kennung 1 mit der Länge L1 und ein Datenelement der Kennung 3 mit der Länge L2 aufweist.

Die Erzeugung eines in Fig. 3 dargestellten anonymisierten Datensatzes 44 auf der Grundlage der produktiven Datensätze 40, 40' und der nicht-produktiven Datensätze 42, 42' und 42" läuft nun folgendermaßen ab. In einem ersten Schritt wird aus den produktiven Datenbanken 14 (z.B. auf der Grundlage eines benutzerdefinierbaren Selektionsmechanismus) ein produktiver Datensatz ermittelt, der anonymisiert und als anonymisierter Datensatz in die Testdatenbank 26 übergeführt werden soll. Dies ist in Fig. 3 beispielhaft für den produktiven Datensatz 40 dargestellt. Es wird hier wiederum ausgegangen, dass die Datenelemente mit den Kennungen 1 und 3 der produktiven Datensätze zu anonymisieren sind. Bei dem Datensatz 40 gemäß Fig. 3 handelt es sich hierbei also um die Datenelemente A und C. Diese beiden Datenelemente A und C sind durch Datenelemente mit korrespondierenden Kennungen eines der nicht-produktiven Datensätze 42, 42' und 42" zu ersetzen.

Dem aus den produktiven Datenbanken 14 herausgegriffenen produktiven Datensatz 40 ist nun in einem nächsten Schritt ein Datensatz aus der nicht-produktiven Datenbank 22 zuzuordnen, dessen Datenelemente mit den Kennungen 1 und 3 die Datenelemente mit den korrespondierenden Kennungen des Datensatzes 40 ersetzen. Bei dem in Fig. 3 dargestellten Ausführungsbeispiel ist dem produktiven Datensatz 40 der nicht-produktive Datensatz 42 zugeordnet. Diese Zuordnung kann deterministisch (unter Verwendung einer Zuordnungstabelle oder eines kryptographischen Mechanismus) oder zufallsbasiert erfolgen.

Zur Erzeugung des anonymisierten Datensatzes 44 werden die Datenelemente mit den Kennungen 1 und 3 des produktiven Datensatzes 40 durch die korrespondierenden Datenelemente des nicht-produktiven Datensatzes 42 ersetzt. Genauer gesagt wird das Datenelement A durch das Datenelement M und das Datenelement C durch das Datenelement N ersetzt, um den produktiven Datensatz 40 zu anonymisieren.
Die Datenelemente B, D, E und F des produktiven Datensatzes 40 bedürfen hingegen keiner Anonymisierung und werden unverändert in den anonymisierten Datensatz 44 übernommen.

Deutlich zu erkennen ist in Fig. 3 der Sachverhalt, dass der anonymisierte Datensatz 44 dasselbe Format wie der produktive Datensatz 40 aufweist. Ferner ist ersichtlich, dass beispielsweise das Datenelement M des nicht-produktiven Datensatzes 42 (je nach Zuordnungsmechanismus jedenfalls mit hoher Wahrscheinlichkeit) eine andere Zeichenkettenlänge aufweisen wird wie das Datenelement A des produktiven Datensatzes 40, welches durch das Datenelement M ersetzt wird. Die Forderung der übereinstimmenden Zeichenlängenketten bezieht sich nämlich nicht auf die einzelnen produktiven und nicht-produktiven Datensätze, die jeweils zur Erzeugung des anonymisierten Datensatzes kombiniert werden. Vielmehr betrifft diese Forderung allgemein den Gesamtinhalt der nicht-produktiven Datenbank 22.

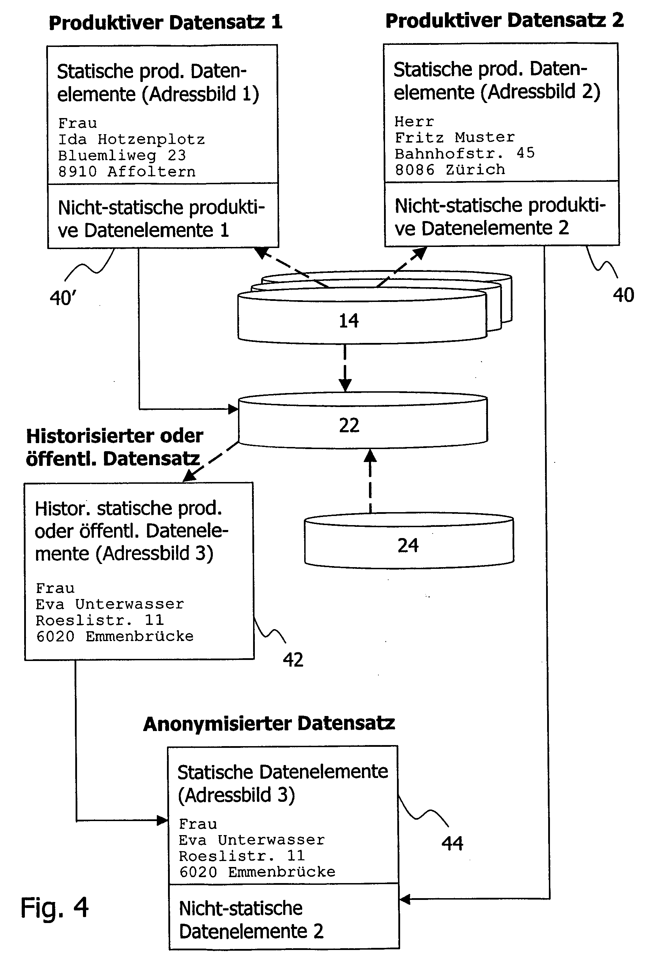

Fig. 4 zeigt in einer schematischen Darstellung ein weiteres Ausführungsbeispiel für die Erzeugung eines anonymisierten Datensatzes durch Kombination von Datenelementen eines produktiven Datensatzes mit Datenelementen eines nicht-produktiven Datensatzes.

Das in Fig. 4 gezeigte Ausführungsbeispiel betrifft das Erzeugen von anonymisierten Datensätzen für das Entwickeln und Testen von vor allem solchen Anwendungsprogrammen, welche die in den anonymisierten Datensätzen enthaltenen Datenelemente auf einer Anzeigeeinrichtung oder in Form einer Drucksache ausgeben. Genauer gesagt sollen anonymisierte Datensätze zur Verfügung gestellt werden, die das Entwickeln und Testen von adressbasierten Anwendungsprogrammen gestatten. Derartige Anwendungsprogramme dienen etwa dazu, einen adressierten Kontoauszug mit nicht-statischen produktiven Daten (wie Kontoständen, Kontoumsätzen, usw.) und statischen produktiven Daten (wie Kontonummern, Namens- und Adressangaben) zu erstellen. Es muss hierbei beispielsweise sichergestellt werden, dass sämtliche relevanten Adressangaben innerhalb eines begrenzten Sichtfensters eines Kuverts dargestellt sind. Aus diesem Grund besteht die Anforderung, dass die anonymisierten Adressbilder hinsichtlich ihrer geometrischen Abmessungen ein getreues Abbild der produktiven Adressbilder sind, um beispielsweise die relative Lage zwischen Sichtfenster und Adressaufdruck überprüfen können. Aufgrund der Vertraulichkeit der nicht-statischen produktiven Daten (Bankgeheimnis) dürfen jedoch nicht die produktiven Datensätze beim Erstellen von Probe-Kontoauszügen zu Entwicklungs- und Testzwecken verwendet werden. Vielmehr besteht die Aufgabe, den nicht-statischen produktiven Daten anonymisierte Adressbilder zuzuordnen.

Hierzu wird, wie in Fig. 4 dargestellt, in einem ersten Schritt eine nicht-produktive Datenbank 22 mit nicht-produktiven Datensätzen erstellt. Dies geschieht derart, dass eine benutzerselektierte Auswahl der in den produktiven Datenbanken 14 enthaltenen Adressbilder (also der statischen Datenelemente) nach Art einer Momentaufnahme des Datenbankinhalts in die nicht-produktive Datenbank 22 übergeführt werden. Zur Verbesserung des Anonymisierungsgrades werden ferner Adressbilder aus der öffentlich zugänglichen elektronischen Datenbank 24 (beispielsweise aus einem elektronischen Telefonbuch) in die nicht-produktive Datenbank 22 geladen. Ungefähr 10 % der Datensätze der nicht-produktiven Datenbank 22 entstammen der öffentlich zugänglichen elektronischen Datenbank 24.

Gemäß einer Variante des in Fig. 4 dargestellten Ausführungsbeispiels werden lediglich die Datenelemente Name und Vorname aus den produktiven Datenbanken 14 in die nicht-produktive Datenbank 22 übergeführt. Dort werden diese beiden Datenelemente mit Adressangaben (z.B. Strasse, Ort, usw.) kombiniert, die der öffentlich zugänglichen elektronischen Datenbank 24 entstammen können. Zusätzlich können der öffentlich zugänglichen elektronischen Datenbank 24 noch komplette Adressbilder (einschließlich Vornamen und Nachnamen) zur Erzeugung nicht-produktiver Datensätze entnommen werden. Diese Maßnahme ist insbesondere dann zweckmäßig, wenn (zusätzlich zu aus den produktiven Datenbanken 14 ausgelesenen Datenelementen) noch weitere Datenelemente benötigt werden, um zu gewährleisten, dass in der nicht-produktiven Datenbank 22 kein Datensatz mit einer eindeutigen Zeichenkettenlängenkombination auftritt.

Gemäß dem in Fig. 4 dargestellten Ausführungsbeispiel stimmen die nicht-produktiven Datensätze hinsichtlich der Zeichenkettenlängen-Statistik der Datenelemente Vorname und Nachname (zugeordnete Datenelement-Kennungen finden intern Verwendung, sind in Fig. 4 aber nicht dargestellt) mit produktiven Datensätzen überein. Dies impliziert beispielsweise, dass es für das produktive Adressbild 1 des produktiven Datensatzes 40' mit einem dreizeichigen Vornamen (Ida) und einem 11 Zeichen umfassenden Nachnamen (Hotzenplotz) einen entsprechenden nicht-produktiven Datensatz 42 mit einem nicht-produktiven Adressbild gibt, das ebenfalls einen drei Zeichen umfassenden Vornamen (Eva) und einen 11 Zeichen umfassenden Nachnamen (Unterwasser) gibt. Für den zu erzeugenden anonymisierten Datensatz 44 und für Entwicklungs- und Testzwecke ist es hierbei unerheblich, ob die Datenelemente des Adressbildes des nicht-produktiven Datensatzes 42 der öffentlich zugänglichen elektronischen Datenbank 26 oder aber den produktiven Datenbanken 14 entstammen.

Ferner sind die statistischen Eigenschaften der Datensätze, Datenelemente und von Datenelementabschnitten in der nicht-produktiven Datenbank 22 den statistischen Eigenschaften der Datensätze, Datenelemente und von Datenelementabschnitte in den produktiven Datenbanken 14 weitestgehend angenähert. Dies bezieht sich beispielsweise auf die statistischen Verteilungen der Zeichenkettenlängen und auch auf die statistischen Verteilungen der Anfangsbuchstaben wenigstens der Nachnamen. Diese Maßnahme erleichtert das Entwickeln und Testen von Anwendungsprogrammen, die Sortieralgorithmen oder ähnliche selektive Mechanismen umfassen.

Zum Erzeugen des in Fig. 4 dargestellten anonymisierten Datensatzes 44 wird zunächst je ein Datensatz 40 aus den produktiven Datenbanken 14 sowie ein Datensatz 42 aus der nicht-produktiven Datenbank 22 ermittelt. Die Ermittlung kann auf einer Zuordnungstabelle oder spontan und zufallsbasiert erfolgen. Der nicht-produktive Datensatz 42 umfasst (wenigstens) ein historisiertes produktives oder öffentliches Adressbild, welches zur Anonymisierung des produktiven Datensatzes 40 dessen produktives Adressbild ersetzt. Der zu erzeugende anonymisierte Datensatz 44 umfasst dann neben dem aus der nicht-produktiven Datenbank 22 ausgelesenen Adressbild des Datensatzes 42 die nicht-statischen Datenelemente des produktiven Datensatzes 40. Erforderlichenfalls können einzelne nicht-statische produktive Datenelemente des produktiven Datensatzes 40 ebenfalls noch anonymisiert werden. Die hierzu erforderlichen (nicht-produktiven) Daten können dem nicht-produktiven Datensatz 42 entnommen oder anderweitig erzeugt werden.

Wie aus der obigen Beschreibung ersichtlich wurde, gestattet die Erfindung auf einfache Weise die Erzeugung anonymisierter Datensätze aus produktiven Datensätzen. Die anonymisierten Datensätze eignen sich hervorragend für Probeläufe von neuen Anwendungsprogrammen, da sie den produktiven Datensätzen insbesondere hinsichtlich der Zeichenkettenlängen angenähert wurden. Diese Tatsache führt zu geringeren Anlaufproblemen beim ersten Einsatz neuer Anwendungen im produktiven Umfeld.

Obwohl die Erfindung anhand mehrerer einzelner Ausführungsformen, die untereinander kombinierbar sind, erläutert wurde, sind zahlreiche Änderungen und Modifikationen denkbar. Die Erfindung kann daher, innerhalb des Umfangs der nachfolgenden Ansprüche, auch abweichend von den obigen Ausführungen praktiziert werden.

## Patentansprüche

1. Verfahren zum computergestützten Erzeugen von anonymisierten Datensätzen für das Entwickeln und Testen von Anwendungsprogrammen, die für den Einsatz in einem produktiven Umfeld (12) bestimmt sind, umfassend die Schritte:
- Bereitstellen wenigstens einer produktiven Datenbank (14) mit Datensätzen, welche zu anonymisierende produktive Datenelemente enthalten;
- Bereitstellen wenigstens einer nicht-produktiven Datenbank (22) mit Datensätzen, welche hinsichtlich der Zeichenkettenlängen darin enthaltener Datenelemente zumindest im Wesentlichen mit produktiven Datensätzen übereinstimmen;
- Ermitteln eines ersten Datensatzes aus der produktiven Datenbank (14);
- Ermitteln eines zweiten Datensatzes aus der nicht-produktiven Datenbank (22); und
- Erzeugen eines anonymisierten Datensatzes durch Ersetzen der zu anonymisierenden Datenelemente des ersten Datensatzes mit Datenelementen des zweiten Datensatzes.

2. Verfahren nach Anspruch 1, **dadurch gekennzeichnet,**
**dass** das Ersetzen derart erfolgt, dass die zu anonymisierenden Datenelemente des ersten Datensatzes zumindest mit hoher Wahrscheinlichkeit andere Zeichenkettenlängen aufweisen als die sie ersetzenden Datenelemente des zweiten Datensatzes.

3. Verfahren nach Anspruch 1 oder 2, **dadurch gekennzeichnet,**
**dass** in der nicht-produktiven Datenbank (22) kein Datensatz enthalten ist, der bezüglich einer Kombination der Zeichenkettenlängen einer darin enthaltenen Datenelementmenge in der nicht-produktiven Datenbank (22) nur ein einziges Mal vorkommt.

4. Verfahren nach einem der Ansprüche 1 bis 3, **dadurch gekennzeichnet,**
**dass** die in der nicht-produktiven Datenbank (22) enthaltenen Datenelemente bezüglich der Anzahl darin enthaltener Zeichen und/oder bezüglich ihrer geometrischen Abmessungen bei einer Wiedergabe jeweils produktiven Datenelementen aus der produktiven Datenbank (14) entsprechen.

5. Verfahren nach einem der Ansprüche 1 bis 4, **dadurch gekennzeichnet,**
**dass** die Datenelementbilder der nicht-produktiven Datensätze zumindest teilweise mit den Datenelementbildern der produktiven Datensätze übereinstimmen.

6. Verfahren nach einem der Ansprüche 1 bis 5, **dadurch gekennzeichnet,**
**dass** die nicht-produktive Datenbank (22) Kopien von Datensätzen und/oder Kopien von Datenelementen der produktiven Datenbank (14) enthält.

7. Verfahren nach einem der Ansprüche 1 bis 6, **dadurch gekennzeichnet,**
**dass** die nicht-produktive Datenbank (22) Datensätze mit von den produktiven Datenelementen verschiedenen Datenelementen enthält.

8. Verfahren nach Anspruch 7, **dadurch gekennzeichnet,**
**dass** der Anteil von Datensätzen mit von den produktiven Datenelementen verschiedenen Datenelementen in der nicht-produktiven Datenbank (22) mindestens 5% beträgt.

9. Verfahren nach einem der Ansprüche 7 oder 8, **dadurch gekennzeichnet,**
**dass** die von den produktiven Datenelementen verschiedenen Datenelemente in der nicht-produktiven Datenbank (22) einer öffentlich zugänglichen elektronischen Datenbank (24) oder Datei entnommen wurden.

10. Verfahren nach einem der Ansprüche 1 bis 9, **dadurch gekennzeichnet,**
**dass** das Ermitteln des ersten und/oder zweiten Datensatzes auf einer Zuordnung zwischen Datenelementen oder Datensätzen aus der nicht-produktiven Datenbank (22) und zu anonymisierenden Datenelementen oder Datensätzen aus der produktiven Datenbank (14) basiert.

11. Verfahren nach Anspruch 10, **dadurch gekennzeichnet,**
**dass** die Zuordnung deterministisch erfolgt.

12. Verfahren nach Anspruch 11, **dadurch gekennzeichnet,**
**dass** die Zuordnung auf einem kryptographischen Mechanismus basiert.

13. Verfahren nach Anspruch 11 oder 12, **dadurch gekennzeichnet,**
**dass** die deterministische Zuordnung eine nachträgliche Bestimmung des einem anonymisierten Datenelement oder Datensatz zugeordneten Datenelements oder Datensatzes aus der produktiven Datenbank (14) gestattet.

14. Verfahren nach einem der Ansprüche 11 bis 13, **dadurch gekennzeichnet,**
**dass** die deterministische Zuordnung gewährleistet, dass einem Datenelement oder Datensatz aus der produktiven Datenbank (14) immer dasselbe Datenelement oder derselbe Datensatz aus der nicht-produktiven Datenbank (22) zugeordnet wird.

15. Verfahren nach Anspruch 10, **dadurch gekennzeichnet,**
**dass** die Zuordnung zufallsbasiert erfolgt.

16. Verfahren nach einem der Ansprüche 1 bis 15, **dadurch gekennzeichnet,**
**dass** die statistischen Eigenschaften der Datenelemente oder von Datenelementabschnitten in der nicht-produktiven Datenbank (22) den statistischen Eigenschaften der Datenelemente oder von Datenelementabschnitten in der produktiven Datenbank (14) entsprechen oder angenähert sind.

17. Verfahren nach einem der Ansprüche 1 bis 16, **dadurch gekennzeichnet,**
**dass** die statistischen Verteilungen wenigstens des jeweils ersten alphanumerischen Zeichens von Datenelementen in der produktiven Datenbank (14) und entsprechenden Datenelementen in der nicht-produktiven Datenbank (22) zumindest ungefähr übereinstimmen.

18. Verfahren nach einem der Ansprüche 1 bis 17, **dadurch gekennzeichnet,**
**dass** den einzelnen Datenelementen in der produktiven Datenbank (14) und in der nicht-produktiven Datenbank (22) jeweils Kennungen zugeordnet sind und dass die zu anonymisierenden produktiven Datenelemente durch Datenelemente mit korrespondierenden Kennungen ersetzt werden.

19. Verfahren nach einem der Ansprüche 1 bis 18, **dadurch gekennzeichnet,**
**dass** die in der nicht-produktiven Datenbank (22) enthaltenen Datenelemente einen von einem Benutzer erfassbaren Bedeutungsinhalt haben.

20. Verfahren nach einem der Ansprüche 1 bis 19, **dadurch gekennzeichnet,**
**dass** die in der produktiven und/oder die in der nicht-produktiven Datenbank (14, 22) enthaltenen Datenelemente Namens- und/oder Adressdaten enthalten.

21. Verfahren nach einem der Ansprüche 1 bis 19, **dadurch gekennzeichnet,**
**dass** die anonymisierten Datensätze zum Entwickeln und Testen von Anwendungsprogrammen verwendet werden, welche die in den anonymisierten Datensätze enthaltenden Datenelemente auf einer Anzeigeeinrichtung oder in Form einer Drucksache ausgeben.

22. Computerprogrammprodukt mit Programmcodemitteln zum Durchführen des Verfahrens nach einem der Ansprüche 1 bis 21, wenn das Computerprogrammprodukt auf einem oder mehreren Computern (20) ausgeführt wird.

23. Computerprogrammprodukt nach Anspruch 22, abgespeichert auf einem computerlesbaren Datenträger.

24. Computersystem (10) zum Erzeugen von anonymisierten Datensätzen für das Entwickeln und Testen von Anwendungsprogrammen, die für den Einsatz in einem produktiven Umfeld (12) bestimmt sind, umfassend:
- wenigstens eine produktive Datenbank (14) mit Datensätzen, welche zu anonymisierende produktive Datenelemente enthalten;
- wenigstens eine nicht-produktive Datenbank (22) mit Datensätzen, welche hinsichtlich der Zeichenkettenlängen von darin enthaltenen Datenelementen zumindest im Wesentlichen mit produktiven Datenelemente übereinstimmen;
- einen programmierten Anonymisierungscomputer (10) mit Zugriff auf die produktive Datenbank (14) und auf die nicht-produktive Datenbank (20), zum Ermitteln eines ersten Datensatzes aus der produktiven Datenbank (14) und eines zweiten Datensatzes aus der nicht-produktiven Datenbank (22) und zum Erzeugen eines anonymisierten Datensatzes durch Ersetzen der zu anonymisierenden Datenelemente des ersten Datensatzes mit Datenelementen des zweiten Datensatzes.
